(19)

**Europäisches Patentamt**

**European Patent Office**

**Office européen des brevets**

(11) **EP 3 540 457 A1**

(12) **EUROPÄISCHE PATENTANMELDUNG**

(43) Veröffentlichungstag:
18.09.2019 Patentblatt 2019/38

(51) Int Cl.:
G01S 7/35 (2006.01)    G01S 7/41 (2006.01)
G01S 13/536 (2006.01)    G01S 13/58 (2006.01)
G01S 13/93 (2006.01)    G01S 13/86 (2006.01)
G01S 13/02 (2006.01)

(21) Anmeldenummer: 19157633.9

(22) Anmeldetag: 18.02.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 12.03.2018 DE 102018203684

(71) Anmelder: ZF Friedrichshafen AG
88046 Friedrichshafen (DE)

(72) Erfinder:
• Sick, Benjamin
  88131 Bodolz (DE)
• Walter, Michael
  9435 Heerbrugg (CH)

(54) **IDENTIFIKATION VON OBJEKTEN MITTELS RADARDATEN**

(57)    Auswerteeinrichtung (10) zum Erhalten einer Segmentierung eines Umfeldes (1) aus einer Radaraufnahme des Umfeldes mit einer Eingangsschnittstelle (11), die ausgeführt ist, erste Trainingsdaten zu erhalten, wobei die ersten Trainingsdaten Radardaten der Radaraufnahme und erste Kennzeichen (2) von in dem mit einem Radarsensor (3), der die Radaraufnahme erzeugt, aufgenommenen Umfeld (1) angeordneten Objekten (4) sind, wobei die Radardaten jeweilige Abstände (5) dieser Objekte (4) zu dem Radarsensor (3) und zu diesen Abständen (5) jeweils gehörende Winkel (6, 7) zwischen den Objekten (4) und dem Radarsensor (3) sind, und wobei die Auswerteeinrichtung (10) ausgeführt ist, ein künstliches neuronales Netzwerk (20) mit den ersten Trainingsdaten vorwärts zu speisen, in der Vorwärtsspeisung mit dem künstlichen neuronalen Netzwerk (20) ermittelte zweite Kennzeichen (8) der Objekte (4) zu erhalten, und Gewichtungsfaktoren (21) für Neuronenverbindungen (22) des künstlichen neuronalen Netzwerks (20) durch Rückwärtsspeisen des künstlichen neuronalen Netzwerks (20) mit dem Fehler zwischen den zweiten Kennzeichen (8) und den ersten Kennzeichen (2) zu erhalten, um bei einer erneuten Vorwärtsspeisung mit diesen Radardaten die Segmentierung des Umfeldes (1) zu erhalten. Ferner betrifft die Erfindung ein Verfahren zum Erhalten von Radardaten, ein Trainingssystem (40), ein Trainingsverfahren, ein Einsatzsystem (60), einen Radarsensor (3) und eine entsprechende Verwendung.

Fig. 1

**Beschreibung**

Die Erfindung betrifft eine Auswerteeinrichtung zum Erhalten einer Segmentierung einer Radaraufnahme eines Umfeldes nach Anspruch 1. Ferner betrifft die Erfindung ein Verfahren zum Erhalten von Radardaten nach Anspruch 4. Außerdem betrifft die Erfindung ein Trainingssystem zum Erhalten einer Segmentierung einer Radaraufnahme eines Umfeldes nach Anspruch 6. Des Weiteren betrifft die Erfindung ein Trainingsverfahren zum Erhalten einer Segmentierung einer Radaraufnahme eines Umfeldes nach Anspruch 8. Darüber hinaus betrifft die Erfindung ein Einsatzsystem für ein Straßenfahrzeug zur Segmentierung von Radaraufnahmen nach Anspruch 10. Die Erfindung betrifft auch einen Radarsensor eines Straßenfahrzeuges mit einem erfindungsgemäßen Einsatzsystem nach Anspruch 11. Die Erfindung betrifft ebenfalls eine Verwendung eines erfindungsgemäßen Einsatzsystems oder eines erfindungsgemäßen Radarsensors als Fahrerassistenzsystem nach Anspruch 12.

Radarsysteme weisen einen Radarsensor und eine Anordnung von Sende- und Empfangsantennen auf. Bei bekannten Radarsystemen werden in einer Range-Doppler-Map, die mit Sende- und Empfangsantennenpaare des Radarsystems erhalten wird, lokale Maxima gesucht. Die lokalen Maxima werden beispielsweise mit einem Falschalarmrate-Algorithmus, im Englischen als Constant False Alarm Rate bezeichnet, gesucht. Die Falschalarmrate gibt die durchschnittliche Anzahl von falschen Zielen, zum Beispiel von Hintergrundrauschen, an. Mit einem Schwellenwert kann festgelegt werden, ab welcher Signalamplitude ein Signal als Ziel angezeigt wird. Signale mit einer Amplitude unterhalb dieses Schwellenwertes werden als Rauschsignale verworfen. Bei der konstanten Falschalarmrate wird der Schwellenwert in Abhängigkeit von Umgebungsbedingungen adaptiv angepasst.

Schwellwerte müssen entsprechend hoch angesetzt werden um erfasste, aber unerwünschte Ziele, im Englischen als Clutter bezeichnet, zu entfernen und nur relevante Ziele zu untersuchen. Dadurch gehen weitere Informationen verloren. Bei beispielsweise 24 Sende- Empfangsantennenpaare mit jeweils einer Entfernungs- und Geschwindigkeitsauflösung von 1024 x 512, also über 12 Millionen Werten, werden meist nur wenige hundert Maxima ausgewählt, welche dann weiter prozessiert werden. Der Rest wird verworfen.

Durch einen Falschalarmrate-Algorithmus wird daher ein Großteil der Informationen aus der ursprünglichen Range-Doppler-Map nicht verwendet. Z.B. werden bei der Signalverarbeitung keine Informationen über detaillierte Charakteristika der Maxima benutzt. Es werden auch weder Informationen über die räumliche Verteilung der Ziele untereinander noch Informationen über eine implizite Antennencharakteristik des Radarsystems verwendet. Lediglich der Signal-Rausch-Wert für jedes Maximum wird weiter benutzt. Globale Zusammenhänge, aus denen ein globales Szenenverständnis ableitbar ist, werden nicht berücksichtigt.

Aus der videobasierten Szenen Segmentierung ist bekannt, eine endliche Anzahl von Videosequenzen vollständig mit Merkmalen wie z.B. Fahrzeug, Fußgänger, Fußweg, Straße, Schild, Baum und/oder Himmel zu kennzeichnen. Das Kennzeichnen wird auch als Labeln bezeichnet. Durch das Labeln wird erreicht, dass erhaltenen Pixelrohdaten von bildgebenden Systemen die Bedeutung des aufgenommenen Objekts zuordnenbar ist. Ein künstliches neuronales Netzwerk wird mit entsprechend gelabelten Aufnahmen trainiert, um Objektcharakteristika, wie z.B. Ausdehnung und/oder Farbe, als auch räumliche Relationen der Objekte zueinander, beispielsweise dass sich eine Straße unterhalb eines Fahrzeuges und Bäume und Schilder neben der Straße befinden, zu erhalten. Ein künstliches neuronales Netzwerk, das eine semantische Segmentierung von Bildaufnahmen in Echtzeit erhält, ist in arXiv: 1704.08545 offenbart.

Hier setzt die Erfindung an. Der Erfindung hat die Aufgabe zu Grunde gelegen, eine semantische Segmentierung von Radaraufnahmen eines Umfeldes bereitzustellen, um ein globales Szenenverständnis für dieses Umfeld zu erhalten.

Die Aufgabe wird gelöst durch

- eine Auswerteeinrichtung zum Erhalten einer Segmentierung einer Radaraufnahme eines Umfeldes mit den Merkmalen des Anspruchs 1,
- ein Verfahren zum Erhalten von Radardaten mit den Merkmalen des Anspruchs 4,
- ein Trainingssystem zum Erhalten einer Segmentierung einer Radaraufnahme eines Umfeldes mit den Merkmalen des Anspruchs 6,
- ein Trainingsverfahren zum Erhalten einer Segmentierung einer Radaraufnahme eines Umfeldes mit den Merkmalen des Anspruchs 8,
- ein Einsatzsystem für ein Straßenfahrzeug zur Segmentierung von Radaraufnahmen mit den Merkmalen des Anspruchs 10,
- einen Radarsensor 3 eines Straßenfahrzeuges mit einem erfindungsgemäßen Einsatzsystems gemäß Anspruch 11 und
- eine Verwendung eines erfindungsgemäßen Einsatzsystems oder eines erfindungsgemäßen Radarsensors als Fahrerassistenzsystem gemäß Anspruch 12.

Weiterbildungen und vorteilhafte Ausgestaltungen sind in den Unteransprüchen angegeben.
Mit der erfindungsgemäßen Auswerteeinrichtung wird eine Radaraufnahme eines Umfeldes segmentiert. Die Auswerteeinrichtung weist eine Eingangsschnittstelle, die ausgeführt ist, erste Trainingsdaten zu er-halten. Die ersten Trainingsdaten sind Radardaten der Radaraufnahme und erste Kennzeichen von in dem mit einem Radarsensor, der die Radaraufnahme erzeugt, aufgenommenen Umfeld angeordneten Objekten. Die Radardaten sind jeweilige Abstände dieser Objekte zu dem Radarsensor und zu diesen Abständen jeweils gehörende Winkel zwischen den Objekten und dem Radarsensor. Die Auswerteeinrichtung ist ausgeführt, ein künstliches neuronales Netzwerk mit den ersten Trainingsdaten vorwärts zu speisen. Die Auswerteeinrichtung ist ausgeführt, in der Vorwärtsspeisung mit dem künstlichen neuronalen Netzwerk ermittelte zweite Kennzeichen der Objekte zu erhalten. Ferner ist die Auswerteeinrichtung ausgeführt, Gewichtungsfaktoren für Neuronenverbindungen des künstlichen neuronalen Netzwerks durch Rückwärtsspeisen des künstlichen neuronalen Netzwerks mit dem Fehler zwischen den zweiten Kennzeichen und den ersten Kennzeichen zu erhalten. Damit wird bei einer erneuten Vorwärtsspeisung mit diesen Radardaten eine Segmentierung des Umfeldes erhalten.

Die nachfolgenden Definitionen gelten für den gesamten Gegenstand der Erfindung.

Eine Auswerteeinrichtung ist eine Vorrichtung, die eingehende Informationen verarbeitet und ein aus dieser Verarbeitung resultierendes Ergebnis ausgibt. Insbesondere ist eine Auswerteeinrichtung eine elektronische Schaltung, wie z.B. eine zentrale Prozessoreinheit oder ein Grafikprozessor.

Radar ist die Abkürzung für Radio Detection and Ranging und bezeichnet Erkennungs- und Ortungsverfahren auf der Basis elektromagnetischer Wellen im Radiofrequenzbereich. Der Radiofrequenzbereich umfasst Frequenzen unterhalb 3000 GHz, also Langwellen ab 30 kHz, Mittelwelle, Kurzwellen und Ultrakurzwelle bis 300 MHz. Ein Radarsensor wird neben einem Kamerasensor oder einem Lidarsensor als Umfelderfassungssensor eines Fahrerassistenzsystems verwendet.

Segmentierung ist ein Teilgebiet der digitalen Bildverarbeitung und des maschinellen Sehens. Segmentierung bedeutet die Erzeugung von inhaltlich zusammenhängenden Regionen nach einem bestimmten Homogenitätskriterium.

Eine Schnittstelle ist eine Einrichtung zwischen wenigstens zwei Funktionseinheiten, an der ein Austausch von logischen Größen, z.B. Daten oder physikalischen Größen, z.B. elektrischen Signalen, erfolgt, entweder nur unidirektional oder bidirektional. Der Austausch kann analog oder digital erfolgen. Der Austausch kann drahtlos oder drahtgebunden erfolgen. Eine Schnittstelle kann zwischen Software und Software, Hardware und Hardware sowie Software und Hardware und Hardware und Software bestehen.

Trainingsdaten sind Daten, mit denen ein lernender Mechanismus, beispielsweise ein künstliches neuronales Netzwerk, Informationen lernt. Für ein künstliches neuronales Netzwerk in einem Fahrerassistenzsystem eines Fahrzeuges können Trainingsdaten mit dem Fahrzeug während einer Trainingsfahrt erhaltene Daten sein. Trainingsdaten sind auch simulierte Daten. Erste Trainingsdaten sind Soll-Trainingsdaten, d.h. positive Trainingsdaten, mit denen der lernende Mechanismus wahre Informationen lernt. Zweite Trainingsdaten sind Fehler-Trainingsdaten, z.B. Fehler-Kennzeichen von Objekten. Die Fehler-Kennzeichen weisen jeweils ein Korrekturkennzeichen, um ein erste Kennzeichen aus dem Fehler-Kennzeichen zu erhalten. Fehler-Trainingsdaten sind negative Trainingsdaten, durch die der lernende Mechanismus lernt, auf einen Fehler zu reagieren. Vorzugsweise ist die Auswerteeinrichtung ausgeführt ist, das künstliche neuronale Netzwerk mit zweiten Trainingsdaten vorwärts zu speisen. Die zweiten Trainingsdaten werden über die Eingangsschnittstelle oder eine separate zweite Eingangsschnittstelle erhalten.

Erste Kennzeichen sind Kennzeichen eines Objekts, die das Objekt charakterisieren. Die ersten Kennzeichen sind die gegenständlichen, realen Merkmale eines Objekts. Die ersten Kennzeichen sind mit einem optischen System wie z.B. einer Kamera feststellbar und entsprechen dann den mit diesem optischen System wahrnehmbaren Kennzeichen. Die ersten Kennzeichen werden auch Soll-Kennzeichen genannt. Zum Beispiel sind erste Kennzeichen geometrische Abmessungen und/oder Farbe eines Objekts. Erste Kennzeichen eines Feuerwehrautos sind z.B. Länge, Höhe und Breite des Autos und die Farbe Rot. Vorzugsweise enthalten die ersten Kennzeichen eines auch Relationsangaben zu einem zweiten Objekt, z.B. gegenseitige Anordnung und/oder Abstand.

Zweite Kennzeichen sind die Kennzeichen eines Objekts, die ein Mechanismus für dieses Objekt ermittelt hat. Die zweiten Kennzeichen werden auch Ist-Kennzeichen genannt. Ein Ist-Kennzeichen ist das Kennzeichen, das der lernende Mechanismus nach Verarbeitung der Soll-Information erhält, in der Regel berechnet, das heißt als Ausgang ausgibt. Zu Beginn der Trainingsphase ist das erhaltene Ist-Kennzeichen in der Regel verschieden von dem eingegebenen Soll-Kennzeichen. In der Trainingsphase wird der Fehler zwischen Ist- und Soll-Kennzeichen minimiert, in der Regel nach der Methode der kleinsten Quadrate. Nach der Trainingsphase hat der lernende Mechanismus, beispielsweise das künstliche neuronale Netzwerk, den Lernprozess abgeschlossen und ist trainiert. Bei einem trainierten künstlichen neuronalen Netzwerk sind die erhaltenen Ist-Kennzeichen annähernd gleich den Soll-Kennzeichen. Bevorzugt werden die ersten Bildkennzeichen automatisch mit einem bildgebenden Sensor und einer der bekannten Methoden zur semantischen Bildsegmentierung erhalten. Semantische Bildsegmentierung bedeutet, Objekte eines Bildes mit Klassifikatoren in Klassen einzuteilen. Der bildgebende Sensor führt vorzugsweise einen Algorithmus zur Mustererkennung aus, das heißt der Algorithmus ist ein Klassifikator. Muster werden zum Beispiel mit speziellen Funktionen und/oder Transformationen, die einen Merkmalsraum auf eine Menge von Klassen abbilden, erkannt. Beispielsweise werden mittels einer Hough-Transformation geometrische Figuren erkannt. Vorteilhafterweise ist der Klassifikator ein künstliches neuronales Netzwerk.

Ein künstliches neuronales Netzwerk ist ein Algorithmus, der auf einer elektronischen Schaltung ausgeführt wird und am Vorbild des neuronalen Netzwerks des menschlichen Gehirns programmiert ist. Funktionseinheiten eines künstlichen neuronalen Netzwerks sind künstliche Neuronen, deren Output sich im Allgemeinen als Wert einer Aktivierungsfunktion ausgewertet über eine gewichtete Summe der Inputs plus einem systematischen Fehler, dem sogenannten Bias, ergibt. Durch Testen von mehreren vorbestimmten Inputs mit verschiedenen Gewichtungsfaktoren und/oder Aktivierungsfunktionen werden künstliche neuronale Netzwerke, ähnlich dem menschlichen Gehirn, trainiert. Das Trainieren eines künstlichen neuronalen Netzwerks mit Hilfe von vorbestimmten Inputs, das heißt Soll-Trainingsdaten, wird maschinelles Lernen genannt. Eine Teilmenge des maschinellen Lernens ist das tiefgehende Lernen, das sogenannte Deep Learning, bei dem eine Reihe hierarchischer Schichten von Neuronen, sogenannten Hidden Layers, genutzt wird, um den Prozess des maschinellen Lernens durchzuführen. Ein künstliches neuronales Netzwerk mit mehreren Hidden Layers ist ein Deep Neural Network. Ein trainiertes künstliches neuronales Netzwerk zeichnet sich durch zweckgerichtetes Reagieren auf neue Informationen aus. Beispiele künstlicher neuronaler Netzwerke sind Perzeptrons, konvolutionale oder rekurrente neuronale Netzwerke. Mit Gewichtungsfaktoren werden Verbindungen zwischen Neuronen bewertet. Vorwärtsspeisen, im Englischen als forward propagation bezeichnet, bedeutet, dass eine Information in die Eingangsschicht des künstlichen neuronalen Netzwerks eingespeist wird, die folgenden Schichten durchläuft und in der Ausgabeschicht ausgegeben wird. Rückwärtsspeisen, im Englischen als backward propagation bezeichnet, bedeutet, dass eine Information in die Ausgabeschicht eingegeben wird und in der Eingangsschicht ausgegeben wird. Durch sukzessives Rückwärtsspeisen des Fehlers aus der Ausgabeschicht in die jeweils vorherige Schicht bis hin zur Eingangsschicht werden die Fehler der jeweiligen Schichten erhalten. Die Fehler sind eine Funktion der Gewichtungsfaktoren. Durch Minimierung des Fehlers in der Trainingsphase werden damit die Gewichtungsfaktoren geändert. Dadurch wird bei erneutem Einspeisen Eingabe eine Annäherung an die gewünschte Ausgabe erreicht. Die Rückwärtsspeisung ist ausführlich in Michael A. Nielsen, Neural Networks and Deep Learning, Determination Press, 2015, beschrieben.

Bevorzugt ist ein konvolutionales künstliches neuronales Netzwerk. Bei einem derartigen Netzwerk wird über ein großes Input-Merkmalsbild ein vergleichsweise kleiner Filterkernel gelegt. Die Aktivierung jedes Neuron wird über eine diskrete Konvolution mit diesem Filterkernel und/oder Maximum-Pooling berechnet. Mit Maximum-Pooling wird aus einem Bereich des Input-Merkmalbildes das lokale Maximum verwertet.

Damit erhält die Auswerteeinrichtung aus einer Radaraufnahme eines Umfeldes eine szenensegmentierte Radaraufnahme. Szenensegmentiert bedeutet, dass eine dreidimensionale Beschreibung von Objekten erhalten wird. Das künstliche neuronale Netzwerk lernt Strukturen in den Radardaten, die zu den Objekten des Umfeldes gehören, zu erkennen und diese Strukturen auf die Objekte abzubilden und eine Relation zu den Objekten zu bilden.

Bevorzugt ist die Auswerteeinrichtung ausgeführt ist, in Abhängigkeit der ersten Kennzeichen und der Segmentierung aus der Radaraufnahme eine virtuelle Bilddarstellung des Umfeldes mit dem künstlichen neuronalen Netzwerk zu erhalten.

Die Bilddarstellung, die mit den Radardaten erhalten wird, ist eine virtuelle Bilddarstellung des Umfeldes, vergleichbar mit einem virtuellen Kamerabild. Diese Bilddarstellung ist keine reale Bilddarstellung eines optischen Systems. Reale Objekte im Umfeld zeigen sich in den Radardaten zunächst als entsprechende Strukturen. Das künstliche neuronale Netzwerk lernt diese Strukturen in den Radardaten zu erkennen. Mittels den ersten Kennzeichen lernt das künstliche neuronale Netzwerk, diese Strukturen auf Objekte abzubilden und eine Relation zu diesen Objekten zu bilden. Damit erhält das künstliche neuronale Netzwerk aus einer Radaraufnahme eines Umfeldes eine virtuelle Bilddarstellung dieses Umfeldes erhalten. Mit dieser virtuellen Bilddarstellung kann eine reale Bilddarstellung eines optischen Systems, z.B. einer Kamera, plausibilisiert werden.

Vorteilhafterweise sind die ersten Kennzeichen Kennzeichen von Straßen, an Straßen angeordneten Objekten, vorzugsweise Bäumen, Fahrzeugen, Personen, Verkehrszeichen und/oder Fahrzeugrückhaltesystemen, vorzugsweise Schutzplanken, sind. Damit können insbesondere Fahrzeugklassen anhand der Radardaten erkannt werden.

Das erfindungsgemäße Verfahren zum Erhalten von Radardaten weist die folgenden Verfahrensschritte auf:

- Aussenden von modulierten Sendesignalen,
- Erhalten von Überlagerungssignalen in Abhängigkeit von Frequenzmodulation und Abständen und Relativgeschwindigkeiten von Objekten jeweils zu dem Radarsensor, an denen die Sendesignale reflektiert werden, wobei die Überlagerungssignale jeweils eine Überlagerung wenigstens eines Reflexionssignals mit wenigstens einem der Sendesignale sind,
- Erhalten einer Abstands-Geschwindigkeitsverteilung der Objekte in Abhängigkeit der Überlagerungssignale,
- für jeden Wert der Abstands-Geschwindigkeitsverteilung Bestimmen von Azimut- und Elevationswinkeln zwischen Überlagerungssignalen, die aus einer durch Azimut- und Elevationswinkel gegebenen Richtung an dem Radarsensor ankommen, und dem Radarsensor, und
- Erhalten von Radardaten in Form eines vierdimensionalen Datenbereichs mit den Dimensionen Abstand, Relativgeschwindigkeit, Azimut- und Elevationswinkel.

Vorzugsweise sind die Sendesignale Frequenz moduliert.

Die Sendesignale sind vorzugsweise mit dem Frequency Modulated Continuous Wave Verfahren moduliert und sind in schneller Abfolge ausgesendete Signale mit einer ansteigenden Frequenzrampe. Das Frequency Modulated Continuous Wave Verfahren ist z.B. in A.G. Stove, Linear FMCW radar techniques, in IEE Proceedings F- Radar and Signal Processing, vol. 139, no. 5, pp. 343-350, 1992 offenbart.

Ein derartiges Sendesignal $s_{TX}(t)$ hat folgende Form:

$$s_{\mathrm{TX}}(t) = A_{\mathrm{TX}} \sin(2\pi(f_0 t + \frac{1}{2}\alpha t^2) + \varphi_0).$$

Der Index TX steht für transmitted. $A_{TX}$ ist die Amplitude des Sendesignals $s_{TX}(t)$. $f_0$ ist die Startfrequenz der Frequenzmodulation. $\alpha$ ist die Frequenzmodulationsrate, im Englischen als chirp bezeichnet. $\Phi_0$ ist die Phase zum Startzeitpunkt t=0.

Ein Reflexionssignal $s_{RX}(t)$ ist ein Signal, das an einem angestrahlten Objekt reflektiert wird. Ein derartiges Reflexionssignal $s_{RX}(t)$ hat folgende Form:

$$s_{\mathrm{RX}}(t) = A_{\mathrm{RX}} \sin(2\pi(f_0(t-\tau) + \frac{1}{2}\alpha(t-\tau)^2) + \varphi_0 \\ + \varphi_{\mathrm{target}}).$$

Der Index RX steht für reflected. $A_{RX}$ ist die Amplitude des Reflexionssignals $s_{RX}(t)$. $\Phi_{target}$ ist eine durch ein Ziel hervorgerufene Phasenverschiebung. $\tau$ ist die Flugzeit des Reflexionssignals, die sich aufgrund Dopplerverschiebung ergibt zu:

$$\tau(t) = \frac{2}{c_0}(r + vt)$$

Dabei ist $c_0$ die Lichtgeschwindigkeit, r ist der Abstand des angestrahlten Objekts zu dem Radarsensor. v ist die Relativgeschwindigkeit zwischen Objekt und Radarsensor.

Das Überlagerungssignal $s_{IF}(t)$ des Sendesignals $s_{TX}(t)$ und Reflexionssignals $s_{RX}(t)$ hat unter Vernachlässigung von $\Phi_{target}$ die folgende Form:

$$s_{\mathrm{IF}}(t) = A_{\mathrm{IF}} \cos(2\pi(f_0\tau + \alpha t\tau - \frac{1}{2}\alpha\tau^2)).$$

Der Index IF steht für intermediate frequency. $A_{IF}$ ist die Amplitude des Überlagerungssignals $s_{IF}(t)$. Mit Hilfe der Relation für die Flugzeit $\tau$ des Reflexionssignals $s_{RX}(t)$ und unter der Annahme, dass die Relativgeschwindigkeit v viel kleiner als die Lichtgeschwindigkeit $c_0$ ist, kann die Frequenz $f_{IF}$ des Überlagerungssignals wie folgt dargestellt werden:

$$f_{\mathrm{IF}}(t) = 2\alpha \frac{r}{c_0} + 2f_0 \frac{v}{c_0} + 2\alpha t \frac{v}{c_0}.$$

Damit hängt die Frequenz $f_{IF}$ des Überlagerungssignals $s_{IF}(t)$ vom Abstand r des angestrahlten Objekts, dessen Relativgeschwindigkeit v zu dem Radarsensor und der Frequenzmodulationsrate $\alpha$ ab.

Für jedes Paar von Sende- und Empfangsantennenpaar erhält man damit eine Abstands-Geschwindigkeitsverteilung, die im Englischen als Range-Doppler-Map bezeichnet wird.

Erfindungswesentlich ist, dass für jeden Wert der Abstands-Geschwindigkeitsverteilung, d.h. für jeden Punkt der Range-Doppler-Map aus allen Sende- und Empfangsantennenpaaren, die Richtung bestimmt wird, aus der das Überlagerungssignal ankommt. Im Gegensatz zu bekannten Verfahren wird also nicht nur nach lokalen Maxima mittels konstanten Falschalarmraten-Algorithmus gesucht, vielmehr werden alle Informationen der Range-Doppler-Map verwertet. Als Ergebnis ergibt sich ein vierdimensionaler Datenbereich mit den Dimensionen Abstand r, Geschwindigkeit v, Azimut- und Elevationswinkel. Dieser Datenbereich enthält alle Maxima und deren Form und Relation zueinander. Erfindungswesentlich ist, dass das künstliche neuronale Netzwerk Strukturen in diesem Datenbereich erlernt und mittels eines Trainings mit Objekten eine Relation zu diesen Objekten bildet. Damit ist das künstliche neuronale Netzwerk ausgeführt, die Radardaten Abstand, Geschwindigkeit, Azimut- und Elevationswinkel in Objektdaten zu übersetzen.

Der Azimutwinkel ist der Winkel zwischen einer ersten Bezugsrichtung eines Koordinatensystems und der Orthogonal-Projektion der Strecke zwischen dem Objekt und dem Koordinatenursprung in die Ebene, die von der ersten Bezugsrichtung und einer zweiten, zu der ersten Bezugsrichtung orthogonal angeordneten, Bezugsrichtung aufgespannt wird. Der Azimutwinkel wird gezählt von Null bis $2\pi$.

Der Elevationswinkel ist der Winkel zwischen der Polrichtung und der Strecke zwischen dem Objekt und dem Koordinatenursprung. Der Elevationswinkel wird gezählt von 0 bis $\pi$.

Ein vollständiger Durchlauf des Azimut Winkels und des Elevationswinkels ergibt eine Kugeloberfläche mit einem gegebenen Radius.

Winkel zwischen Objekten in einem Abstand r und dem Radarsensor werden mit der Direction of Arrival Methode bestimmt, die darauf beruht, dass Empfangssignale von Empfangsantennen der einer Antennenanordnung einen Phasenunterschied aufweisen. Ein Beispiel für einen Direction of Arrival Algorithmus ist das bekannte Beamforming, bei dem für ein Gitter aus möglichen Winkeln die Summe aller Empfangssignale mit den entsprechenden Phasenkorrekturen gebildet wird. Damit können mehrere Zielobjekte in gleichem Abstand r zu dem Radarsensor, und mit gleicher Geschwindigkeit v, aber mit unterschiedlicher Direction of Arrival erkannt werden. Bereits mit einer zweidimensionalen Anordnung der Empfangsantennen lässt sich die Richtung eines Objekts durch Auswertung der Lauflängenunterschiede und Phasenverschiebungen der Empfangssignale bestimmen und folglich zusammen mit dem Abstand r die exakte dreidimensionale Position.

Bevorzugt sind die mit der erfindungsgemäßen Auswerteeinrichtung erhaltenen Radardaten die gemäß dem erfindungsgemäßen Verfahren erhaltenen Radardaten.

Das erfindungsgemäße Trainingssystem zum Erhalten einer Segmentierung einer Radaraufnahme eines Umfeldes weist einen Radarsensor mit einer Anordnung von Empfangsantennen. Die Empfangsantennen sind ausgeführt, Empfangssignale von mit Sendesignalen angestrahlten, in dem Umfeld angeordneten Objekten zu empfangen. Ferner weist das Trainingssystem wenigstens einen bildgebenden Sensor auf, der ausgeführt ist, in Abhängigkeit einer Bildsegmentierung des Umfelds erste Kennzeichen der Objekte zu erhalten. Außerdem weist das Trainingssystem eine Auswerteeinrichtung auf, die ausgeführt ist, ein künstliches neuronales Netzwerk mit Radardaten von Überlagerungssignalen von jeweiligen Reflexionssignalen und Sendesignalen und den ersten Kennzeichen vorwärts zu speisen, wobei die Radardaten jeweilige Abstände dieser Objekte zu dem Radarsensor und zu diesen Abständen jeweils gehörende Winkel zwischen den Objekten und dem Radarsensor sind. Die Auswerteeinrichtung ist ausgeführt, in der Vorwärtsspeisung mit dem künstlichen neuronalen Netzwerk ermittelte zweite Kennzeichen der Objekte zu erhalten. Des Weiteren ist die Auswerteeinrichtung ausgeführt, Gewichtungsfaktoren für Neuronenverbindungen des künstlichen neuronalen Netzwerks durch Rückwärtsspeisen des künstlichen neuronalen Netzwerks mit dem Fehler zwischen den zweiten Kennzeichen und den ersten Kennzeichen zu erhalten.

Der bildgebende Sensor ist vorzugsweise eine in einem Straßenfahrzeug verbaute Kamera, mit der durch semantische Bildsegmentierung erste Trainingsdaten automatisch während einer Fahrt mit dem Straßenfahrzeug erzeugt werden. Es liegt aber auch im Rahmen der Erfindung, erste Trainingsdaten automatisch mit einem Lidarsensor oder einer Stereokamera zu erzeugen, um dreidimensionale Trainingsdaten zu erhalten.

Damit wird bei einer erneuten Vorwärtsspeisung mit diesen Radardaten die Segmentierung des Umfeldes erhalten. Es wird damit ein Trainingssystem für ein künstliches neuronales Netzwerk bereitgestellt, um zu lernen, Strukturen in Radardaten zu erkennen und diesen Strukturen eine semantische Bedeutung der entsprechenden Objekte zuzuordnen. Das künstliche neuronale Netzwerk lernt beispielsweise, in Abhängigkeit erster Bildkennzeichen eines Fahrzeuges dessen Position und Ausdehnung anhand Entfernung, Azimut- und Elevationswinkel.

Vorteilhafterweise wird zur Durchführung des Trainingsverfahrens ein erfindungsgemäßes Trainingssystem verwendet.

Das erfindungsgemäße Trainingsverfahren zum Erhalten einer Segmentierung einer Radaraufnahme eines Umfeldes weist die folgenden Verfahrensschritte auf:

- Erhalten von ersten Trainingsdaten, wobei die ersten Trainingsdaten Radardaten der Radaraufnahme und erste Kennzeichen von in dem mit einem Radarsensor, der die Radaraufnahme erzeugt, aufgenommenen Umfeld angeordneten Objekten sind, wobei die Radardaten jeweilige Abstände dieser Objekte zu dem Radarsensor und zu diesen Abständen jeweils gehörende Winkel zwischen den Objekten und dem Radarsensor sind,
- Vorwärtsspeisen eines künstlichen neuronalen Netzwerks mit den ersten Trainingsdaten,
- in der Vorwärtsspeisung Erhalten von mit dem künstlichen neuronalen Netzwerk ermittelten zweiten Kennzeichen der Objekte, und
- Erhalten von Gewichtungsfaktoren für Neuronenverbindungen des künstlichen neuronalen Netzwerks durch Rückwärtsspeisen des künstlichen neuronalen Netzwerks mit dem Fehler zwischen den zweiten Kennzeichen und den ersten Kennzeichen.

Damit stellt die Erfindung zusätzlich ein Trainingsverfahren für ein künstliches neuronales Netzwerk bereit, um zu lernen, Strukturen in Radardaten zu erkennen und diesen Strukturen eine semantische Bedeutung der entsprechenden Objekte der zuzuordnen.

Vorzugsweise wird zur Durchführung des Trainingsverfahrens ein erfindungsgemäßes Trainingssystem.

Das erfindungsgemäße Einsatzsystem für ein Straßenfahrzeug zur Segmentierung von Radaraufnahmen weist eine Eingangsschnittstelle auf, um Radaraufnahmen zu erhalten. Außerdem weist das Einsatzsystem eine Auswerteeinrichtung, die ausgeführt ist, ein gemäß dem erfindungsgemäßen Trainingsverfahren trainiertes künstliches neuronales Netzwerk mit diesen Radaraufnahmen vorwärts zu speisen und in der Vorwärtsspeisung eine Segmentierung dieser Radaraufnahme zu erhalten, und einer Ausgangsschnittstelle, die ausgeführt ist, diese Segmentierung auszugeben. Straßenfahrzeuge sind Landfahrzeuge, die ihre Fahrtrichtung mittels Haftreibung auf einer befahrbaren Unterlage beibehalten oder ändern können. Insbesondere mit Motor betriebene Fahrzeuge, das heißt Kraftfahrzeuge, wie zum Beispiel Automobil oder Motorräder, sind Straßenfahrzeuge.

Im Gegensatz zu dem erfindungsgemäßen Trainingssystem weist das erfindungsgemäße Einsatzsystem ein bereits trainiertes künstliches neuronales Netzwerk auf und stellt als Ausgang die Segmentierung bereit. Das Einsatzsystem hat anstelle von Farbkanälen, in der Regel rot, grün, blau, als Eingangskanäle Abstand, Geschwindigkeit, Azimutund Elevationswinkel. Das Einsatzsystem ist in Abhängigkeit eines entsprechenden Trainings ausgeführt, eine Straße und deren Verlauf durch die Position der Fahrzeuge oder aus lokalen Reflexionen neben Fahrzeugen zu prädizieren. Zusätzlich erkennt das Einsatzsystem insbesondere Brücken, Schilder und Schutzplanken neben der Fahrbahn unter Berücksichtigung der globalen Verteilung der Ziele. Damit wird ein globales Szenenverständnis mit Radardaten erreicht.

In einer bevorzugten Ausgestaltung der Erfindung ist das Einsatzsystem ausgeführt, in Abhängigkeit der Segmentierung aus der Radaraufnahme eine virtuelle Bilddarstellung des Umfeldes mit dem künstlichen neuronalen Netzwerk zu erhalten.

Im Rahmen der Erfindung liegt auch ein Einsatzverfahren, das die folgenden Verfahrensschritte aufweist:

- Erhalten von Radaraufnahmen
- Vorwärtsspeisen eines nach dem erfindungsgemäßen Trainingsverfahren trainierten künstlichen neuronalen Netzwerks mit diesen Radaraufnahmen,
- in der Vorwärtsspeisung Erhalten einer Segmentierung dieser Radaraufnahme und
- Ausgeben dieser Segmentierung.

Vorzugsweise wird zur Durchführung des Einsatzverfahrens ein erfindungsgemäßes Einsatzsystem verwendet.

Erfindungsgemäß ist ein Radarsensor eines Straßenfahrzeuges mit einem erfindungsgemäßen Einsatzsystem bevorzugt.

Erfindungsgemäß ist auch eine Verwendung eines erfindungsgemäßen Einsatzsystems eines erfindungsgemäßen Radarsensors als Fahrerassistenzsystem.

Die Erfindung wird anhand der folgenden Figuren beispielhaft erläutert. Es zeigen:

Fig. 1 ein Ausführungsbeispiel einer erfindungsgemäßen Auswerteeinrichtung,

Fig. 2a ein Ausführungsbeispiel einer Antennenanordnung eines Radarsystems mit zwei Sendeantennen und vier Empfangsantennen,

Fig. 2b Sende- und Empfangsantennenpfade aus Fig. 2a,

Fig. 3 ein Ausführungsbeispiel von in den Pfaden von Fig. 2b erhaltenen Überlagerungssignalen,

Fig. 4 ein Ausführungsbeispiel eines erfindungsgemäßen Trainingssystems,

Fig. 5 ein Ausführungsbeispiel einer Abstands-Geschwindigkeitsverteilung,

Fig. 6 ein Ausführungsbeispiel zu Beamforming,

Fig. 7 ein Ausführungsbeispiel eines erfindungsgemäßen Datenbereichs,

Fig. 8 ein Ausführungsbeispiel eines erfindungsgemäßen Einsatzsystems,

Fig. 9 eine schematische Darstellung des erfindungsgemäßen Verfahrens und

Fig. 10 eine schematische Darstellung des erfindungsgemäßen Trainingsverfahrens.

In den Figuren kennzeichnen gleiche Bezugszeichen gleiche oder funktionsähnliche Bezugsteile. In den jeweiligen Figuren werden die jeweils relevanten Bezugsteile gekennzeichnet.

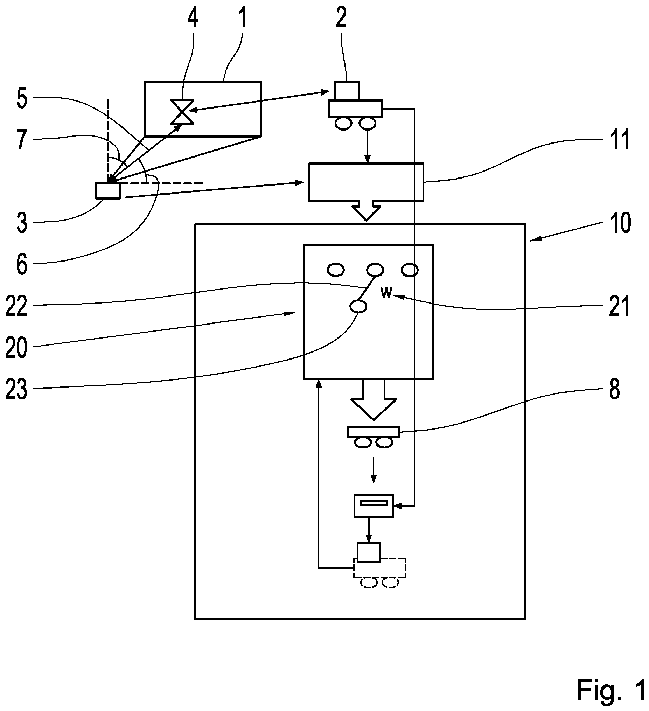

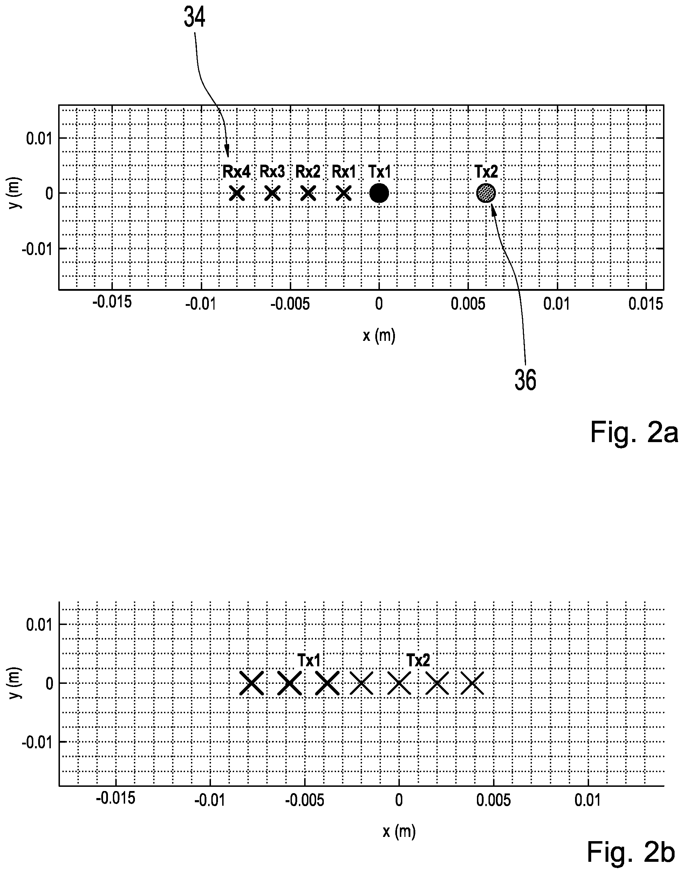

Fig. 1 zeigt einen Radarsensor 3. Der Radarsensor 3 ist für eine Verwendung im automotive Bereich, z.B. zur Verkehrsobjekterkennung oder zur adaptiven Geschwindigkeitsregelung, geeignet, insbesondere als Umfelderfassungssensor eines Fahrerassistenzsystems. Der Radarsensor 3 ist derart ausgeführt, dass die Anforderungen von EURO NCAP, das heißt dem European New Car Assessment Programme, erfüllt sind. Vorzugsweise basiert der Radarsensor auf der im automotive Bereich verwendeten 77-GHz-Silizium-Germanium-Technologie. Der Radarsensor 3 ist Teil eines Radarsystems aufweisend den Radarsensor 3 und eine, vorzugsweise mehrdimensionale, Anordnung von Sendeantennen 36 und Empfangsantennen 34. Fig. 2a zeigt eine zweidimensionale Antennenanordnung mit zwei Sendeantennen 36 und vier Empfangsantennen. Die sich daraus ergebenden acht Sende-Empfangsantennen-Pfade sind in Fig. 2b gezeigt.

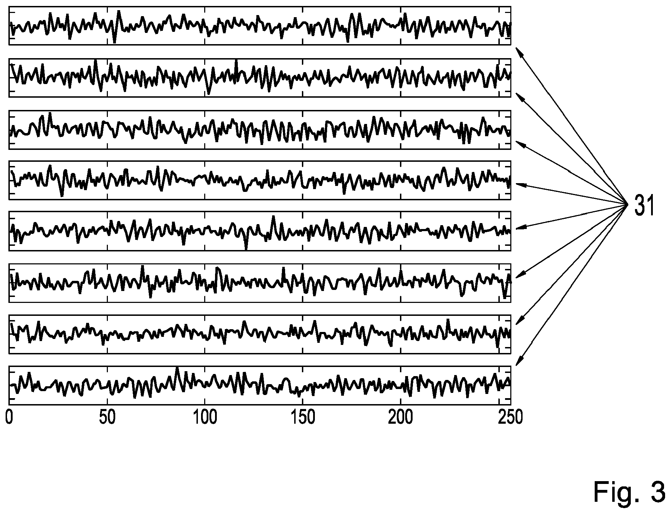

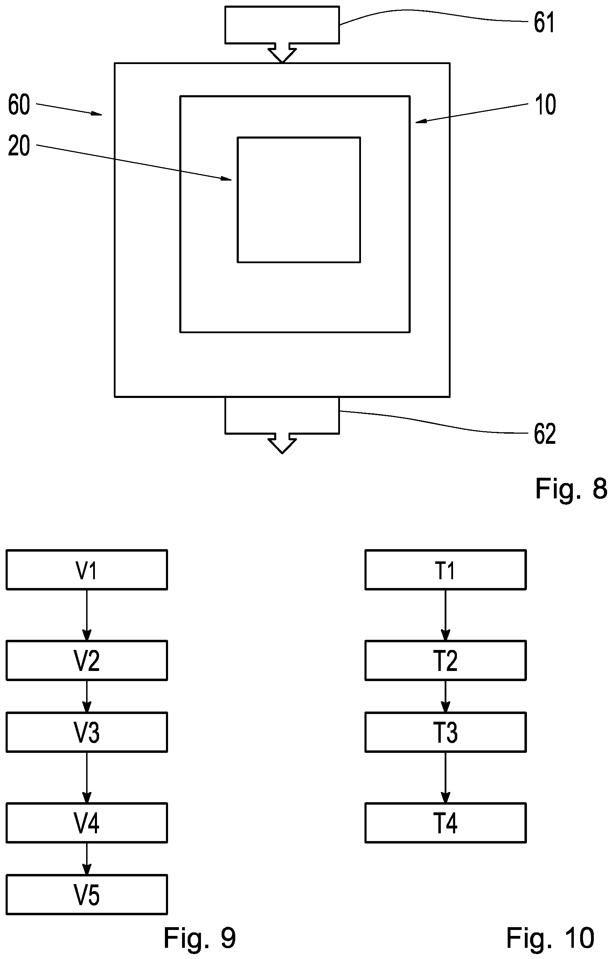

Der Radarsensor 3 nimmt Radardaten eines Umfeldes 1 auf. Fig. 9 zeigt ein Verfahren zum Erhalten von Radardaten. Die Radardaten sind insbesondere ein Abstand 5 eines in dem Umfeld 1 angeordneten Objekts 4, ein Azimutwinkel 6 und ein Elevationswinkel 7 zwischen dem Radarsensor 3 und dem Objekt 4. Azimutwinkel 6 und Elevationswinkel 7 kennzeichnen die Richtung, aus der ein Überlagerungssignal 31 ankommt. Das Überlagerungssignal 31 des Objekts 4 ist in Fig. 3 für die jeweiligen Sende-Empfangsantennen-Pfade gezeigt, wobei Fig. 3 jeweils den zeitlichen Verlauf der Frequenz des Überlagerungssignals 31 zeigt.

Das Objekt 4 in Fig. 1 ist ein Fahrzeug. Erste Kennzeichen 2 des Fahrzeuges sind Abmessungen, Position und Farbe des Fahrzeuges. Die Radardaten und die ersten Kennzeichen 2 werden über eine Eingangsschnittstelle 11 einer Auswerteeinrichtung 10 zugeführt. Die Auswerteeinrichtung 10 ist eine elektronische Schaltung, die Eingangssignale mehrerer Umfelderfassungssensoren, insbesondere des Radarsensors 3 und eines bildgebenden Sensors 50, mit künstlicher Intelligenz in Echtzeit verarbeitet, um insbesondere anhand Radardaten zu verstehen, was um das Fahrzeug herum passiert. Die Auswerteeinrichtung 10 ist derart ausgeführt, dass sie unter großer Hitze, Feuchtigkeit, Staub und anderen Kriterien des automotive Bereichs funktionsfähig ist.

Die Auswerteeinrichtung 10 führt ein künstliches neuronales Netzwerk 20 aus. Das künstliche neuronale Netzwerk 20 ist eine Anordnung von Neuronen 23, die unter einander über jeweilige Neuronenverbindungen 22 verbunden sind. Die Neuronenverbindungen 22 sind mit jeweiligen Gewichtungsfaktoren 21 gewichtet. Anhand der Radardaten und der ersten Kennzeichen 2 berechnet das künstliche neuronale Netzwerk 20 zweite Kennzeichen 8. Ein Fehler zwischen den zweiten Kennzeichen 8 und den ersten Kennzeichen 2, der über eine Differenzbildung erhalten wird, wird in das künstliche neuronale Netzwerk rückwärts gespeist. In der Rückwärtsspeisung stellt das künstliche neuronale Netzwerk 20 während einer Trainingsphase mittels Fehlerminimierung die Gewichtungsfaktoren 21 ein. Das heißt, das künstliche neuronale Netzwerk 20 hat gelernt, dass eine bestimmte Struktur in den Radardaten dem Objekt 4 entspricht.

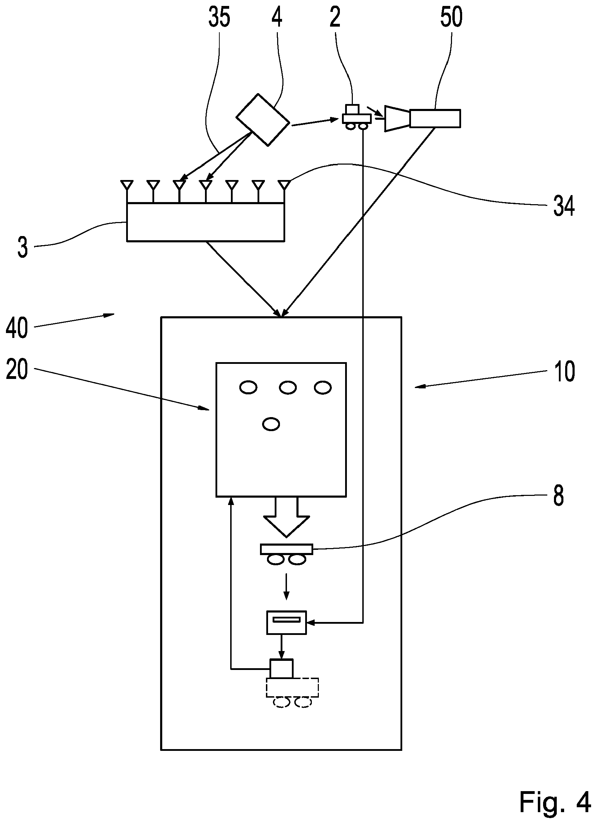

Fig. 4 zeigt ein Trainingssystem 40. Das Trainingssystem 40 weist den Radarsensor 3, den bildgebenden Sensor 50 in Form einer Kamera und die Auswerteinrichtung 10 als funktionszusammenhängende Bestandteile auf. Der Radarsensor 3 weist eine Anordnung von sieben Empfangsantennen 34 auf. Anhand unterschiedlicher Phasen von Empfangssignalen 35 des Objekts 4 an den einzelnen Empfangsantennen 34 wird die Richtung, aus der die Empfangssignale 35 an dem Radarsensor 3 ankommen und damit die Richtung des Objekts 4 relativ zu dem Radarsensor 3, mittels Beamforming festgestellt. Der bildgebende Sensor 50 nimmt das Umfeld 1, das der Radarsensor 3 aufnimmt, auf und erhält mittels semantischer Bildsegmentation die ersten Kennzeichen 2 des Objekts 4. Die mit dem Radarsensor 3 erhaltenen Radardaten und die ersten Kennzeichen 2 werden der Auswerteeinrichtung 10 zugeführt. Die Auswerteeinrichtung 10 führt das künstliche neuronale Netzwerk 20 aus. Das künstliche neuronale Netzwerk 20 erhält zweite Kennzeichen 8. In der Trainingsphase werden die zweiten Kennzeichen 8 den ersten Kennzeichen 2 angenähert. Das Trainingsverfahren ist in Fig. 10 gezeigt.

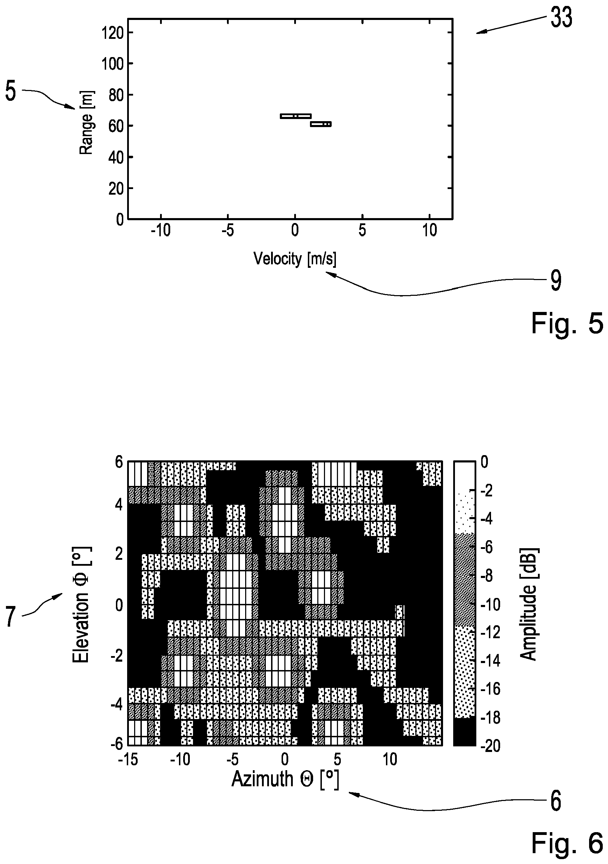

Fig. 5 zeigt eine Abstand-Geschwindigkeitsverteilung 33. Die Abstands-Geschwindigkeitsverteilung 33 ist eine sogenannte Range-Doppler-Map, die aus den Überlagerungssignalen 31 erhalten wird. Auf einer Abszisse ist eine Geschwindigkeit 9 dargestellt. Auf einer Ordinate ist der Abstand 5 dargestellt. Die Abstands-Geschwindigkeitsverteilung 33 zeigt ein erstes Maximum bei einem Abstand 5 von 65 m zu dem Radarsensor 3 und einer Geschwindigkeit 9 relativ zu dem Radarsensor 3 von 0 m/s. Ein zweites Maximum ist bei 60m und 2 m/s.

Fig. 6 zeigt das Ergebnis eines Beamformings der Abstands-Geschwindigkeitsverteilung 33. Auf einer Abszisse ist der Azimutwinkel 6 dargestellt. Auf einer Ordinate ist der Elevationswinkel 7 dargestellt. Ein ausgeprägtes Maximum ist in einem Azimutwinkelbereich von ca. -7° bis -2° und in einem Elevationswinkelbereich von ca. -2° bis +2°.

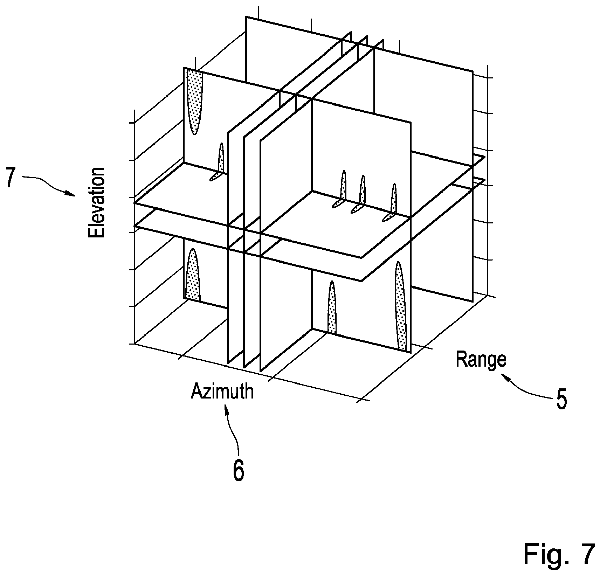

Zusammen mit dem Abstand 5 und der Geschwindigkeit 9 ergibt sich der in Fig. 7 dargestellte vierdimensionale Datenbereich mit den Dimensionen Abstand 5, Geschwindigkeit 9, Azimutwinkel 6 und Elevationswinkel 7. Abbildungstechnisch ist die Dimension für die Geschwindigkeit 9 nicht gezeigt. In diesem Datenbereich weisen Objekte 4 bestimmte Strukturen auf.

Fig. 8 zeigt ein Einsatzsystem 60. Das Einsatzsystem erhält über eine Eingangsschnittstelle 61 Radardaten einer Radaraufnahme des Umfeldes 1. Die Auswerteeinrichtung 10 führt ein nach dem erfindungsgemäßen Trainingsverfahren trainiertes künstliches neuronales Netzwerk 20 aus. Ein Dateneingang des künstlichen neuronalen Netzwerks 20 sind die Radardaten. Ein Datenausgang ist eine Segmentierung des Umfeldes. Diese Segmentierung wird über eine Ausgangsschnittstelle 62 bereitgestellt.

Das Verfahren zum Erhalten von Radardaten ist in Fig. 9 dargestellt. In einem Verfahrensschritt V1 werden modulierte Sendesignale ausgesendet. Die Sendesignale sind nach dem Frequency Modulated Continuous Wave Verfahren Frequenz moduliert. In einem Verfahrensschritt V2 werden in Abhängigkeit von Frequenzmodulation und Abständen 5 und Relativgeschwindigkeiten 9 der Objekte 4die Überlagerungssignalen 31 erhalten. Die Abstands-Geschwindigkeitsverteilung 33 der Objekte 4 wird aus den Überlagerungssignalen 31 in einem Verfahrensschritt V3 erhalten. In einem Verfahrensschritt V4 werden für jeden Wert der Abstands-Geschwindigkeitsverteilung 33 Azimut 6 - und Elevationswinkeln 7 zwischen den Überlagerungssignalen 31, die aus einer durch Azimut 6- und Elevationswinkel 7 gegebenen Richtung an dem Radarsensor 3 ankommen, und dem Radarsensor 3 bestimmt. In einem Verfahrensschritt V5 werden die Radardaten in Form eines vierdimensionalen Datenbereichs mit den Dimensionen Abstand 5, Relativgeschwindigkeit 9, Azimut 6- und Elevationswinkel 7 erhalten.

Das Trainingsverfahren zum Trainieren des künstlichen neuronalen Netzwerks 20 ist in Fig. 10 gezeigt. In einem Verfahrensschritt T1 werden die ersten Trainingsdaten erhalten. Das künstliche neuronale Netzwerk 20 wird in einem Verfahrensschritt T2 mit den ersten Trainingsdaten vorwärts gespeist. In der Vorwärtsspeisung werden in einem Verfahrensschritt T3 mit dem künstlichen neuronalen Netzwerk 20 ermittelte zweite Kennzeichen 8 der Objekte 4 erhalten. In einem Verfahrensschritt T3 werden die Gewichtungsfaktoren 21 der Neuronenverbindungen 22 des künstlichen neuronalen Netzwerks 20 durch Rückwärtsspeisen des künstlichen neuronalen Netzwerks 20 mit dem Fehler zwischen den zweiten Kennzeichen 8 und den ersten Kennzeichen 2 erhalten.

Bezugszeichen

| 1 | Umfeld |
| 2 | erstes Kennzeichen |
| 3 | Radarsensor |
| 4 | Objekt |
| 5 | Abstand |
| 6 | Azimutwinkel |
| 7 | Elevationswinkel |
| 8 | zweites Kennzeichen |
| 9 | Relativgeschwindigkeit |
| 10 | Auswerteeinrichtung |
| 11 | Eingangsschnittstelle |
| 20 | künstliches neuronales Netzwerk |
| 21 | Gewichtungsfaktor |
| 22 | Neuronenverbindung |
| 23 | Neuron |
| 31 | Überlagerungssignal |
| 33 | Abstands-Geschwindigkeitsverteilung |
| 34 | Empfangsantenne |
| 35 | Empfangssignal |
| 36 | Sendeantenne |
| 40 | Trainingssystem |
| 50 | bildgebender Sensor |
| 60 | Einsatzsystem |
| 61 | Eingangsschnittstelle |
| 62 | Ausgangsschnittstelle |
| V1-V5 | Verfahrensschritte |
| T1-T4 | Verfahrensschritte |

**Patentansprüche**

1. Auswerteeinrichtung (10) zum Erhalten einer Segmentierung einer Radaraufnahme eines Umfeldes (1)

- mit einer Eingangsschnittstelle (11), die ausgeführt ist, erste Trainingsdaten zu erhalten, wobei

• die ersten Trainingsdaten Radardaten der Radaraufnahme und erste Kennzeichen (2) von in dem mit einem Radarsensor (3), der die Radaraufnahme erzeugt, aufgenommenen Umfeld (1) angeordneten Objekten (4) sind, wobei die Radardaten jeweilige Abstände (5) dieser Objekte (4) zu dem Radarsensor (3) und zu diesen Abständen (5) jeweils gehörende Winkel (6, 7) zwischen den Objekten (4) und dem Radarsensor (3) sind, und

- wobei die Auswerteeinrichtung (10) ausgeführt ist,

• ein künstliches neuronales Netzwerk (20) mit den ersten Trainingsdaten vorwärts zu speisen,
• in der Vorwärtsspeisung mit dem künstlichen neuronalen Netzwerk (20) ermittelte zweite Kennzeichen (8) der Objekte (4) zu erhalten, und
• Gewichtungsfaktoren (21) für Neuronenverbindungen (22) des künstlichen neuronalen Netzwerks (20) durch Rückwärtsspeisen des künstlichen neuronalen Netzwerks (20) mit dem Fehler zwischen den zweiten Kennzeichen (8) und den ersten Kennzeichen (2) zu erhalten,

um bei einer erneuten Vorwärtsspeisung mit diesen Radardaten die Segmentierung des Umfeldes (1) zu erhalten.

2. Auswerteeinrichtung (10) nach Anspruch 1, **dadurch gekennzeichnet, dass** die Auswerteeinrichtung (10) ausgeführt ist, in Abhängigkeit der ersten Kennzeichen und der Segmentierung aus der Radaraufnahme eine virtuelle Bilddarstellung des Umfeldes mit dem künstlichen neuronalen Netzwerk zu erhalten.

3. Auswerteeinrichtung (10) nach Anspruch 1 oder 2, **dadurch gekennzeichnet, dass** die ersten Kennzeichen (2) Kennzeichen von Straßen, an Straßen angeordneten Objekten, vorzugsweise Bäumen, Fahrzeugen, Personen, Verkehrszeichen und/oder Fahrzeugrückhaltesystemen, vorzugsweise Schutzplanken, sind.

4. Verfahren zum Erhalten von Radardaten mit den folgenden Verfahrensschritten:

- Aussenden von modulierten Sendesignalen (V1),
- Erhalten von Überlagerungssignalen (31) in Abhängigkeit von Frequenzmodulation und Abständen (5) und Relativgeschwindigkeiten (9) von Objekten (4) jeweils zu dem Radarsensor (3), an denen die Sendesignale reflektiert werden (V2), wobei die Überlagerungssignale (31) jeweils eine Überlagerung wenigstens eines Reflexionssignals mit wenigstens einem der Sendesignale sind,
- Erhalten einer Abstands-Geschwindigkeitsverteilung (33) der Objekte (4) in Abhängigkeit der Überlagerungssignale (31) (V3),
- für jeden Wert der Abstands-Geschwindigkeitsverteilung (33) Bestimmen von Azimut (6) - und Elevationswinkeln (7) zwischen Überlagerungssignalen (31), die aus einer durch Azimut (6)- und Elevationswinkel (7) gegebenen Richtung an dem Radarsensor (3) ankommen, und dem Radarsensor (3) (V4), und
- Erhalten von Radardaten in Form eines vierdimensionalen Datenbereichs mit den Dimensionen Abstand (5), Relativgeschwindigkeit (9), Azimut (6)- und Elevationswinkel (7) (V5).

5. Auswerteeinrichtung (10) nach einem der Ansprüche 1 bis 3, **dadurch gekennzeichnet, dass** die Radardaten die gemäß dem Verfahren nach Anspruch 4 erhaltenen Radardaten sind.

6. Trainingssystem (40) zum Erhalten einer Segmentierung einer Radaraufnahme eines Umfeldes (1) mit

- einem Radarsensor (3) mit einer Anordnung von Empfangsantennen (34), die ausgeführt sind, Empfangssignale (35) von mit Sendesignalen angestrahlten, in dem Umfeld (1) angeordneten Objekten (4) zu empfangen,
- wenigstens einem bildgebenden Sensor (50), der ausgeführt ist, in Abhängigkeit einer Bildsegmentierung des Umfelds (1) erste Kennzeichen (2) der Objekte (4) zu erhalten, und
- einer Auswerteeinrichtung (10), die ausgeführt ist, ein künstliches neuronales Netzwerk (20) mit Radardaten von Überlagerungssignalen (31) von jeweiligen Reflexionssignalen und Sendesignalen und den ersten Kennzeichen (2) vorwärts zu speisen, wobei die Radardaten jeweilige Abstände (5) dieser Objekte (4) zu dem Radarsensor (3) und zu diesen Abständen (5) jeweils gehörende Winkel (6, 7) zwischen den Objekten (4) und dem Radarsensor (3) sind,

• in der Vorwärtsspeisung mit dem künstlichen neuronalen Netzwerk (20) ermittelte zweite Kennzeichen (8) der Objekte (4) zu erhalten, und
• Gewichtungsfaktoren (21) für Neuronenverbindungen (22) des künstlichen neuronalen Netzwerks (20) durch Rückwärtsspeisen des künstlichen neuronalen Netzwerks (20) mit dem Fehler zwischen den zweiten Kennzeichen (8) und den ersten Kennzeichen (2) zu erhalten,

um bei einer erneuten Vorwärtsspeisung mit diesen Radardaten die Segmentierung des Umfeldes (1) zu erhalten.

**7.** Trainingssystem (40) nach Anspruch 6, **dadurch gekennzeichnet, dass** die Auswerteeinrichtung (10) eine Auswerteeinrichtung (10) nach einem der Ansprüche 1 bis 3 oder 4 ist.

**8.** Trainingsverfahren zum Erhalten einer Segmentierung einer Radaraufnahme eines Umfeldes (1) mit den folgenden Verfahrensschritten:

- Erhalten von ersten Trainingsdaten (T1), wobei die ersten Trainingsdaten Radardaten der Radaraufnahme und erste Kennzeichen (2) von in dem mit einem Radarsensor (3), der die Radaraufnahme erzeugt, aufgenommenen Umfeld (1) angeordneten Objekten (4) sind, wobei die Radardaten jeweilige Abstände (5) dieser Objekte (4) zu dem Radarsensor (3) und zu diesen Abständen (5) jeweils gehörende Winkel (6, 7) zwischen den Objekten (4) und dem Radarsensor (3) sind,
- Vorwärtsspeisen eines künstlichen neuronalen Netzwerks (20) mit den ersten Trainingsdaten (T2),
- in der Vorwärtsspeisung Erhalten von mit dem künstlichen neuronalen Netzwerk (20) ermittelten zweiten Kennzeichen (8) der Objekte (4) (T3), und
- Erhalten von Gewichtungsfaktoren (21) für Neuronenverbindungen (22) des künstlichen neuronalen Netzwerks (20) durch Rückwärtsspeisen des künstlichen neuronalen Netzwerks (20) mit dem Fehler zwischen den zweiten Kennzeichen (8) und den ersten Kennzeichen (2) (T4).

**9.** Trainingsverfahren nach Anspruch 8, **dadurch gekennzeichnet, dass** zur Durchführung des Trainingsverfahrens ein Trainingssystem (40) nach Anspruch 6 oder 7 verwendet wird.

**10.** Einsatzsystem (60) für ein Straßenfahrzeug zur Segmentierung von Radaraufnahmen mit

- einer Eingangsschnittstelle (61), um Radaraufnahmen zu erhalten,
- einer Auswerteeinrichtung (10), die ausgeführt ist, ein gemäß dem Trainingsverfahren nach Anspruch 8 oder 9 trainiertes künstliches neuronales Netzwerk (20) mit diesen Radaraufnahmen vorwärts zu speisen und in der Vorwärtsspeisung eine Segmentierung dieser Radaraufnahme zu erhalten, und
- einer Ausgangsschnittstelle (62), die ausgeführt ist, diese Segmentierung auszugeben.

**11.** Radarsensor (3) eines Straßenfahrzeuges mit einem Einsatzsystem (60) nach Anspruch 10.

**12.** Verwendung eines Einsatzsystems (60) nach Anspruch 10 oder eines Radarsensors (3) nach Anspruch 11 als Fahrerassistenzsystem.

Fig. 1

Fig. 2a

Fig. 2b

31

Fig. 3

Fig. 4

Fig. 5

Fig. 6

Fig. 7

Fig. 8

Fig. 9

Fig. 10

**Europäisches Patentamt**
**European Patent Office**
**Office européen des brevets**

## EUROPÄISCHER RECHERCHENBERICHT

**Nummer der Anmeldung**

EP 19 15 7633

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 116192 A1 (FORD GLOBAL TECH LLC [US]) 25. Januar 2018 (2018-01-25)<br>* Absätze [0001], [0002] *<br>* Absatz [0055] - Absatz [0102] *<br>* Abbildungen 4-6 *<br>----- | 1-12 | INV.<br>G01S7/35<br>G01S7/41<br>G01S13/536<br>G01S13/58<br>G01S13/93 |
| A | DE 10 2017 107626 A1 (FORD GLOBAL TECH LLC [US]) 12. Oktober 2017 (2017-10-12)<br>* Absätze [0001], [0002] *<br>* Absätze [0023] - [0059] *<br>----- | 1-12 | G01S13/86<br><br>ADD.<br>G01S13/02 |
| A | MARTINEZ MADRID J J ET AL: "A NEURAL NETWORK APPROACH TO DOPPLER-BASED TARGET CLASSIFICATION",<br>INTERNATIONAL CONFERENCE RADAR, LONDON, GB,<br>12. Oktober 1992 (1992-10-12), Seiten 450-453, XP002011695,<br>* das ganze Dokument *<br>----- | 1-12 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 31. Juli 2019 | Hirsch, Stefanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 15 7633

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2019

| Im Recherchenbericht angeführtes Patentdokument | Datum der Veröffentlichung | Mitglied(er) der Patentfamilie | Datum der Veröffentlichung |
|---|---|---|---|
| DE 102017116192 A1 | 25-01-2018 | CN 107633303 A<br>DE 102017116192 A1<br>GB 2553654 A<br>RU 2017125562 A<br>US 2018025640 A1 | 26-01-2018<br>25-01-2018<br>14-03-2018<br>23-01-2019<br>25-01-2018 |
| DE 102017107626 A1 | 12-10-2017 | CN 107284443 A<br>DE 102017107626 A1<br>GB 2550475 A<br>RU 2017110250 A<br>US 2017294121 A1 | 24-10-2017<br>12-10-2017<br>22-11-2017<br>28-09-2018<br>12-10-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **A.G. STOVE.** Linear FMCW radar techniques. *IEE Proceedings F- Radar and Signal Processing,* 1992, vol. 139 (5), 343-350